# EUROPEAN PATENT APPLICATION

(11) **EP 3 107 248 A1**
(43) Date of publication of application: **21.12.2016**
(21) Application number: 15748706.7
(22) Date of filing: 10.02.2015
(51) Int. Cl.: H04L 12/70, G06F 9/46, G06F 9/54, H04L 12/24, H04L 12/775

(54) **INFORMATION PROCESSING DEVICE, COMMUNICATION METHOD, NETWORK CONTROL DEVICE, NETWORK CONTROL METHOD, COMMUNICATION SYSTEM, AND PROGRAM**

(30) Priority: 12.02.2014 JP 2014024656
(71) Applicant: NEC Corporation, Tokyo 108-8001 (JP)
(72) Inventor: AKIYOSHI, Ippei, Tokyo 108-8001 (JP)
(74) Representative: Reeve, Nicholas Edward
(86) International application number: PCT/JP2015/000608
(87) International publication number: WO 2015/122176

(57) **Abstract**

When the functions of dedicated appliances are executed by using virtualization technology, the dynamic activation, deactivation, and the like of a virtual machine makes it difficult to continuously manage communication status. An information processing apparatus according to the present invention includes: a first means capable of executing a virtual network function, which provides, on a virtual machine, a function related to communication processing; and a second means capable of connecting a shared database, which stores communication status related to the communication processing executed by each of a plurality of the virtual network functions, with each of the plurality of the virtual network functions.

## Description

### [Technical Field]

The present invention is based upon and claims the benefit of priority from Japanese Patent Application No. 2014-024656, filed on February 12, 2014, the disclosure of which is incorporated herein in its entirety by reference.

The present invention relates to a communication system for communicating among communication apparatuses through communication paths, and more particularly to control of communication paths.

### [Background Art]

In communication systems, to execute various network functions (NFs), a dedicated appliance corresponding to each network function is used. Since such dedicated appliances are needed to build a communication system, a network operator is forced to introduce a new dedicated appliance or appliances when it newly launches a communication service. To introduce dedicated appliances, network operators pay a lot of costs such as purchase expenses, installation spaces, and the like for the dedicated appliances.

In light of such circumstances, studies have been made in recent years to apply a technique for using software to virtually execute network functions which are conventionally executed by dedicated appliances, to communication systems.

In a communication system providing communication services to mobile telephones and the like, a communication terminal such as a mobile telephone communicates with a base station and thereby can access the Internet and the like via a core network. With the above-mentioned virtualization technology, it is considered to use software to virtually execute the functions of dedicated appliances (e.g., gateways) in a core network.

PTL 1 discloses an example of the virtualization technology. In this virtualization technique, a virtualizing apparatus starts up a virtual machine on a computer resource, and user equipment receives a service from this virtual machine.

### [Citation List]

### [Patent Literature]

[PTL 1] Japanese Patent Application Unexamined Publication No. 2011-34403

### [Summary]

### [Technical Problem]

In some cases, a function of managing communication status is required of a dedicated appliance in a communication system.

If the functions of dedicated appliances are executed by using the virtualization technology, it is expected that the dynamic startup, stop and the like of virtual machines are performed, and it is therefore difficult for a network operator to continuously manage the above-mentioned communication statuses.

PTL 1 does not disclose a technique related to the management of communication status by a virtual machine.

Accordingly, an object of the present invention is to provide a technique for managing communication status when the network functions of dedicated appliances are virtually executed by software.

### [Solution to Problem]

An information processing apparatus according to the present invention includes: a first means capable of executing a virtual network function which provides a function related to communication processing on a virtual machine; and a second means capable of connecting a shared database with each of a plurality of virtual network functions, wherein the shared database stores communication status related to the communication processing executed by each of the plurality of virtual network functions.

A communication method according to the present invention includes: executing a virtual network function, which provides a function related to communication processing on a virtual machine; and connecting a shared database with each of a plurality of virtual network functions, wherein the shared database stores communication status related to the communication processing executed by each of the plurality of virtual network functions.

A network control apparatus according to the present invention includes: a first means capable of activating a virtual network function on a virtual machine, wherein the virtual network function provides a function related to communication processing; and a second means capable of connecting a shared database with each of a plurality of virtual network functions, wherein the shared database stores communication status related to the communication processing executed by each of a plurality of virtual network functions.

A network control method according to the present invention includes: activating a virtual network function, which provides a function related to communication processing, on a virtual machine; and connecting a shared database with each of the plurality of virtual network functions, wherein the shared database stores communication status related to the communication processing executed by each of a plurality of the virtual network functions.

A communication system according to the present invention includes: a first means capable of executing a virtual network function, which provides a function related to communication processing on a virtual machine; and a second means capable of connecting a shared database with each of the plurality of the virtual network functions, wherein the shared database stores communication status related to the communication processing executed by each of a plurality of virtual network functions.

A program according to the present invention causes a computer to execute: processing for executing a virtual network function, which provides, on a virtual machine, a function related to communication processing; and processing for connecting a shared database with each of the plurality of virtual network functions, wherein the shared database stores communication status related to the communication processing executed by each of a plurality of the virtual network functions.

### [Advantageous Effects of Invention]

According to the present invention, a technique for managing communication status can be provided when the network functions of dedicated appliances are virtually executed by software.

### [Brief Description of Drawings]

[Fig. 1]

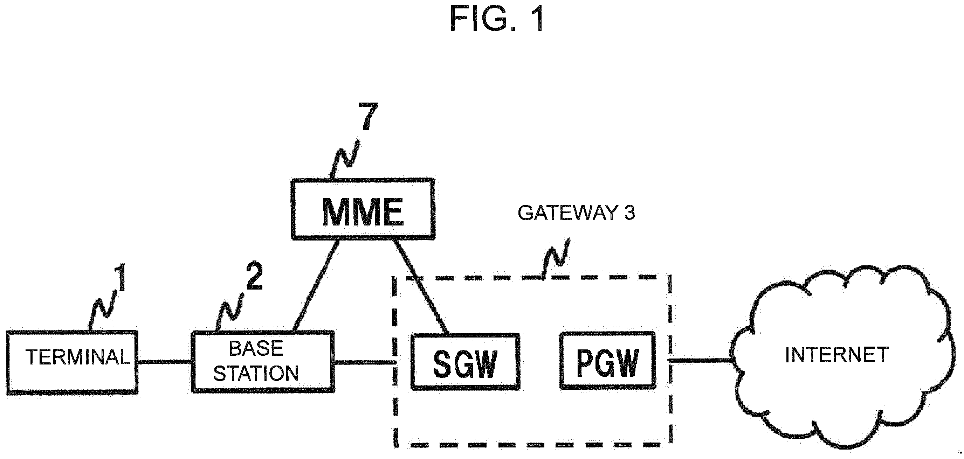

   Fig. 1 is a network diagram showing an example of a communication system according to a first exemplary embodiment of the present invention.
[Fig. 2]

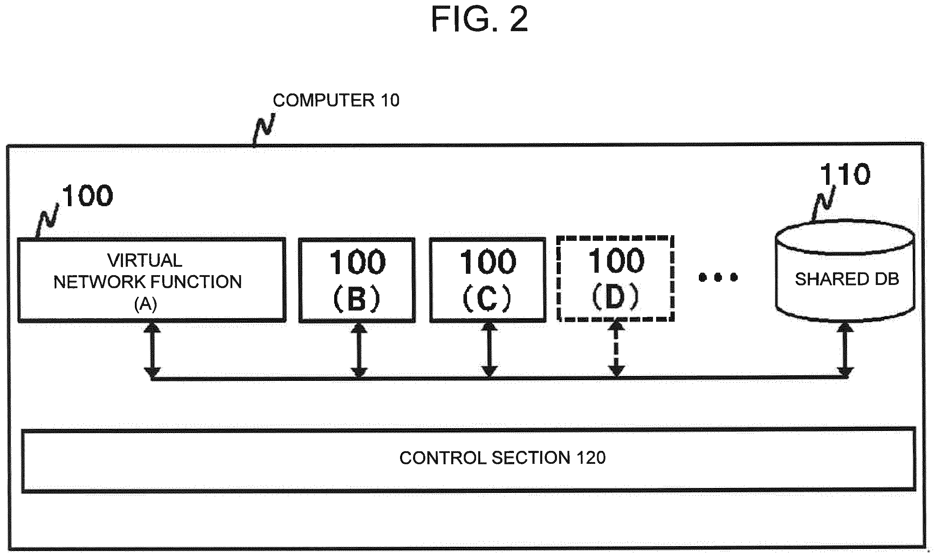

   Fig. 2 is a block diagram showing an example of the functional configuration of a computer executing network functions by using software in the first exemplary embodiment.
[Fig. 3]

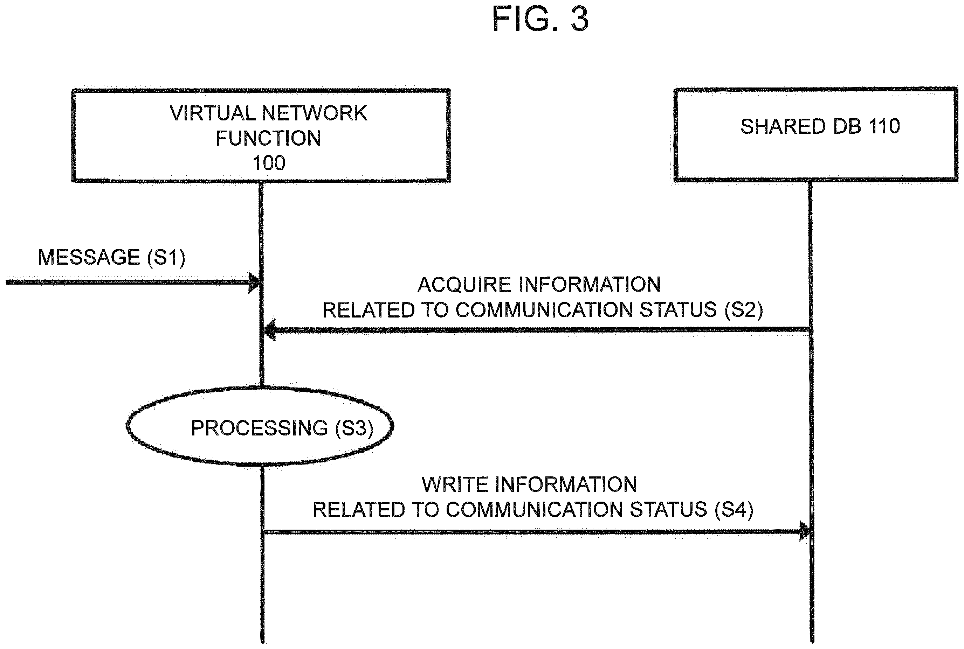

   Fig. 3 is a sequence chart showing an example of operation in the communication system according to the first exemplary embodiment.
[Fig. 4]

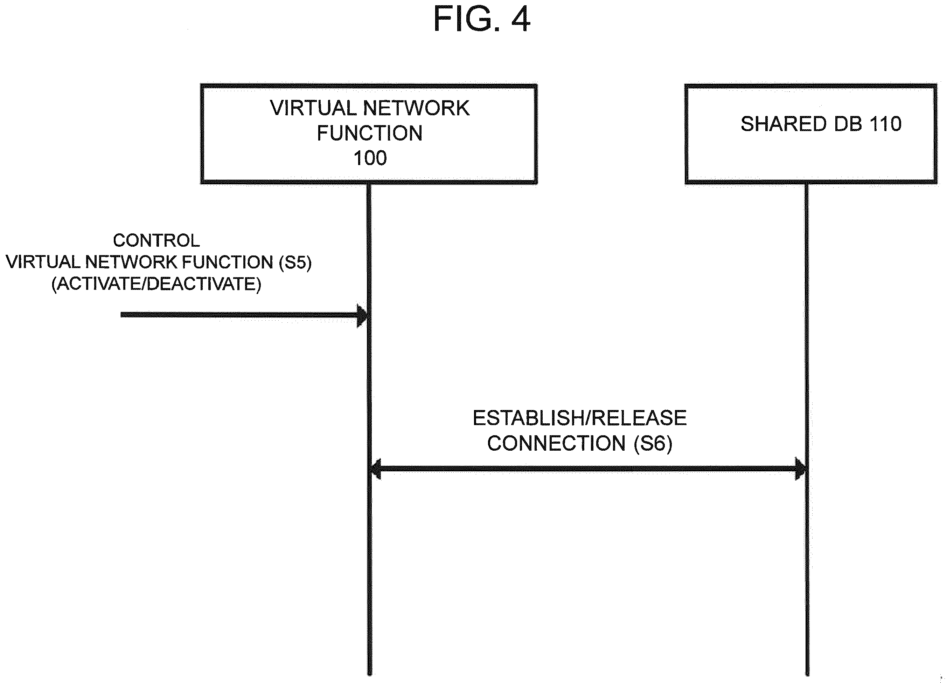

   Fig. 4 is a sequence chart showing an example of connection-related operation in the communication system according to the first exemplary embodiment.
[Fig. 5]

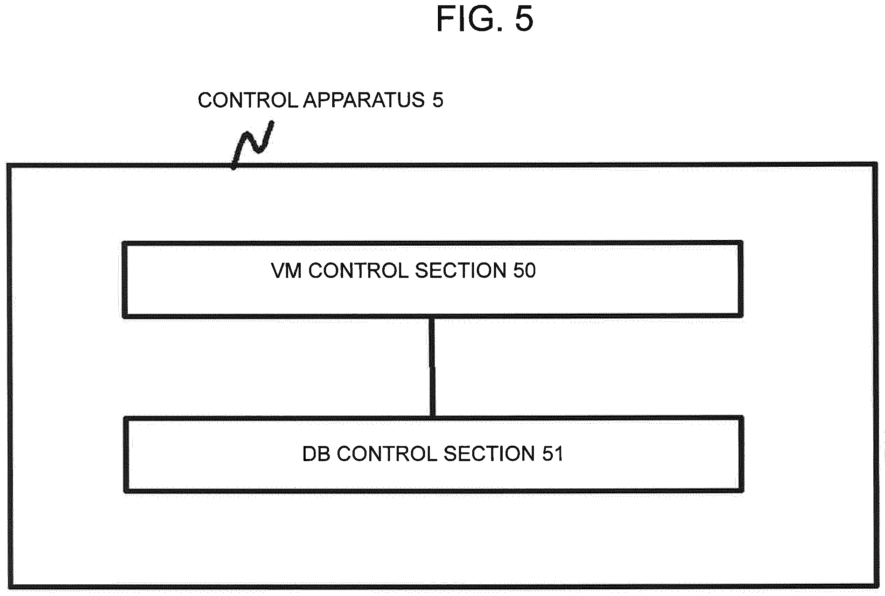

   Fig. 5 is a block diagram showing an example of the functional configuration of a control apparatus according to a second exemplary embodiment of the present invention.
[Fig. 6]

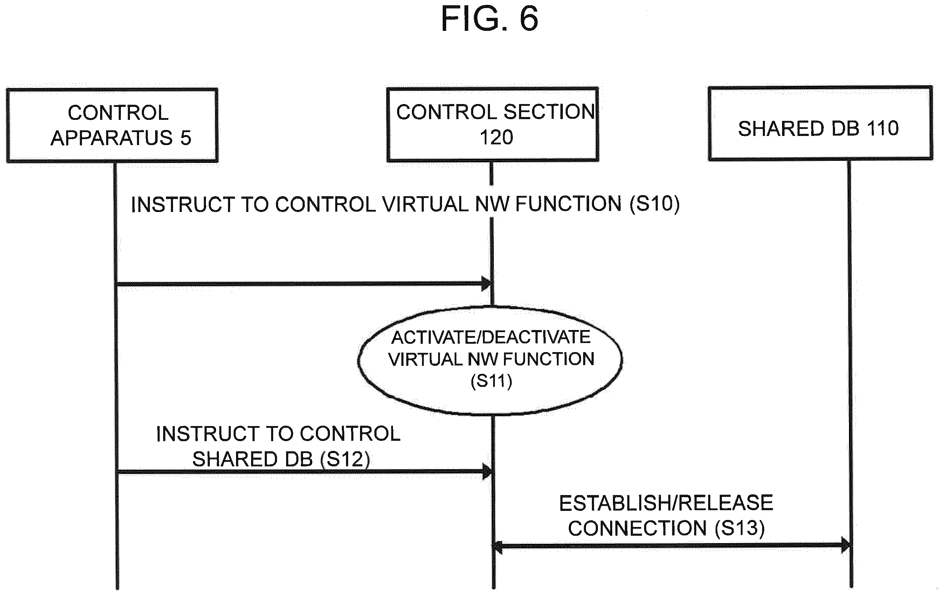

   Fig. 6 is a sequence chart showing an example of operation in a communication system according to the second exemplary embodiment.
[Fig. 7]

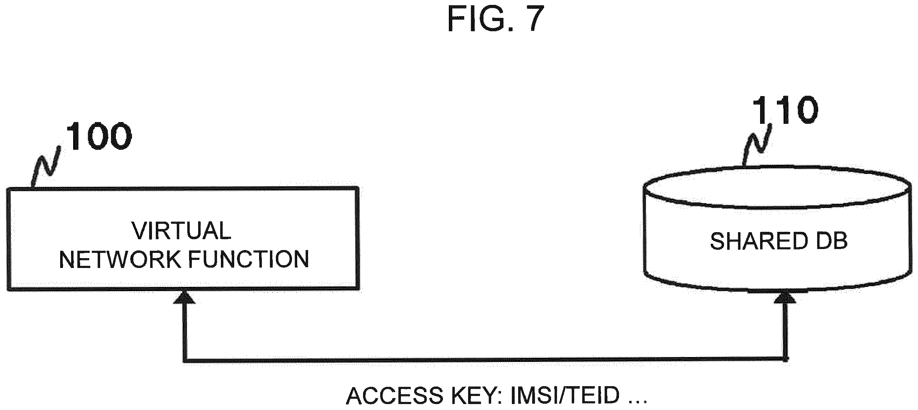

   Fig. 7 is an architecture diagram showing a first example of a communication system according to a third exemplary embodiment of the present invention.
[Fig. 8]

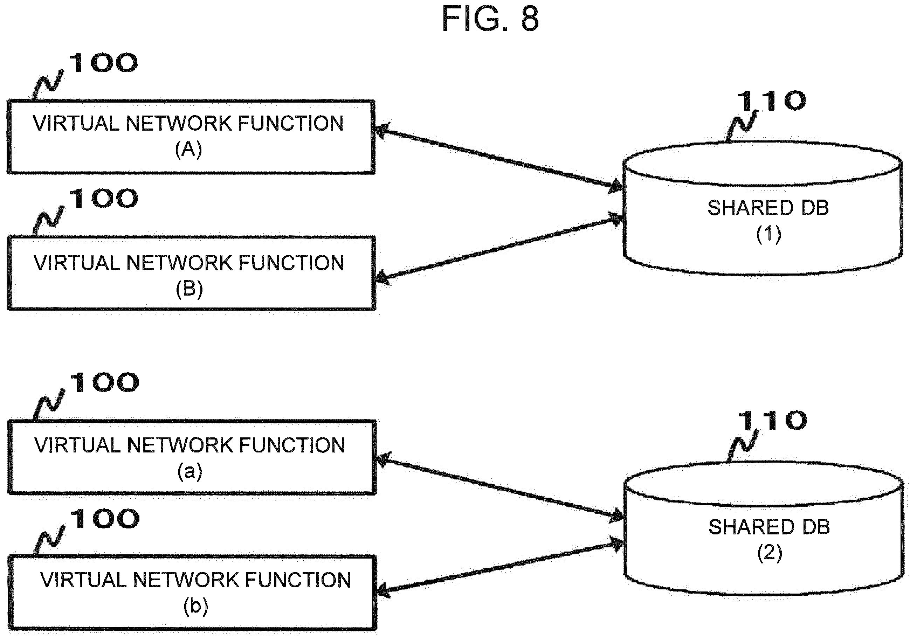

   Fig. 8 is an architecture diagram showing a second example of the communication system according to the third exemplary embodiment.
[Fig. 9]

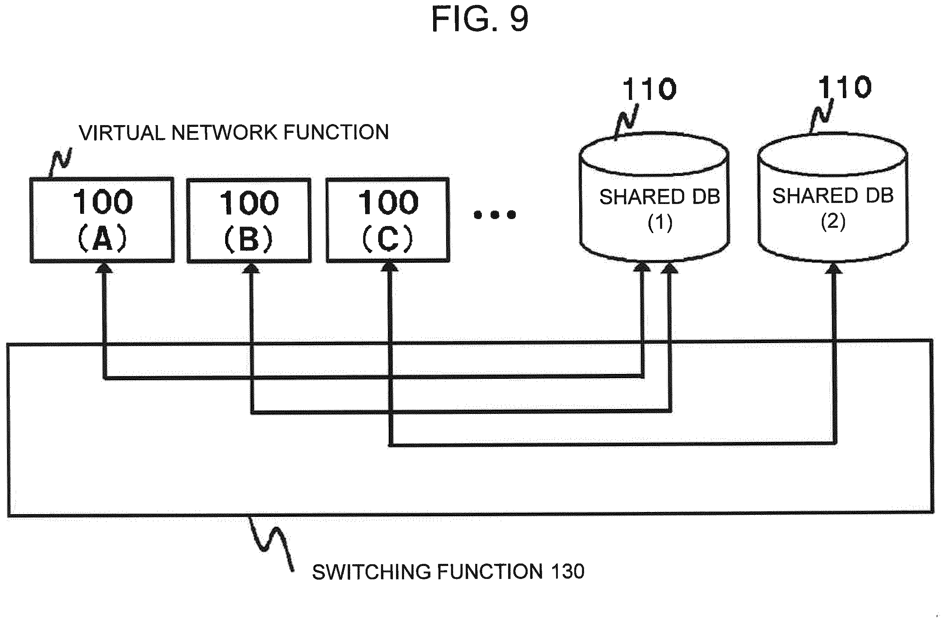

   Fig. 9 is an architecture diagram showing a third example of the communication system according to the third exemplary embodiment.
[Fig. 10]

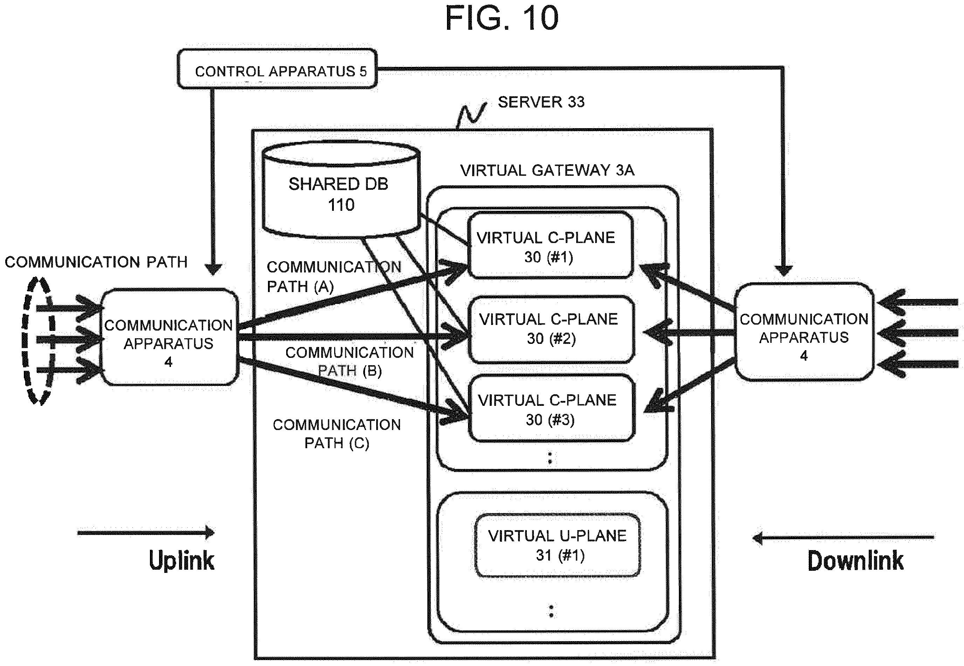

   Fig. 10 is a functional block diagram showing a first example of a communication system according to a fourth exemplary embodiment of the present invention.
[Fig. 11]

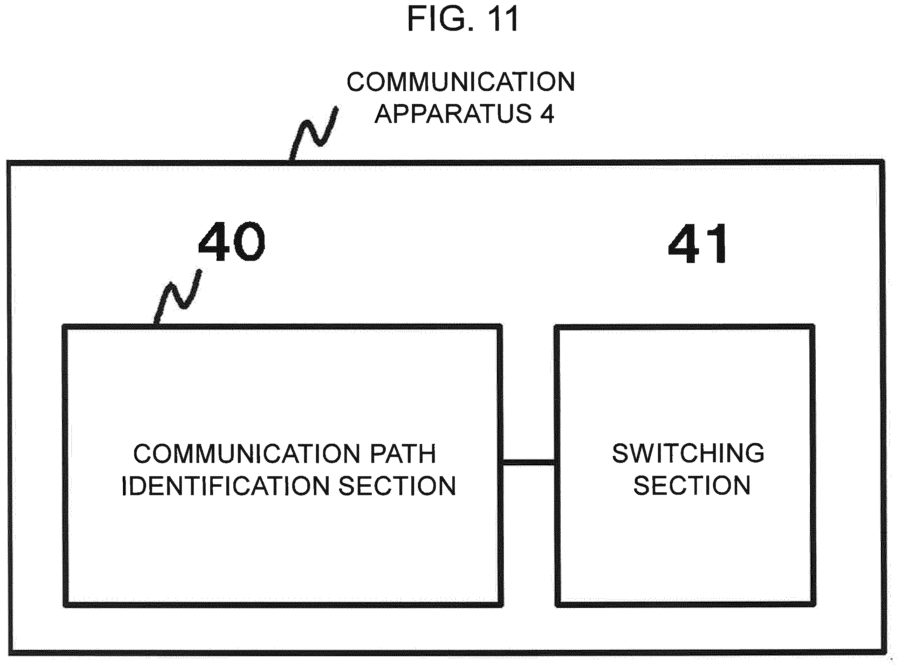

   Fig. 11 is a block diagram showing an example of the configuration of a communication apparatus in the fourth exemplary embodiment.
[Fig. 12]

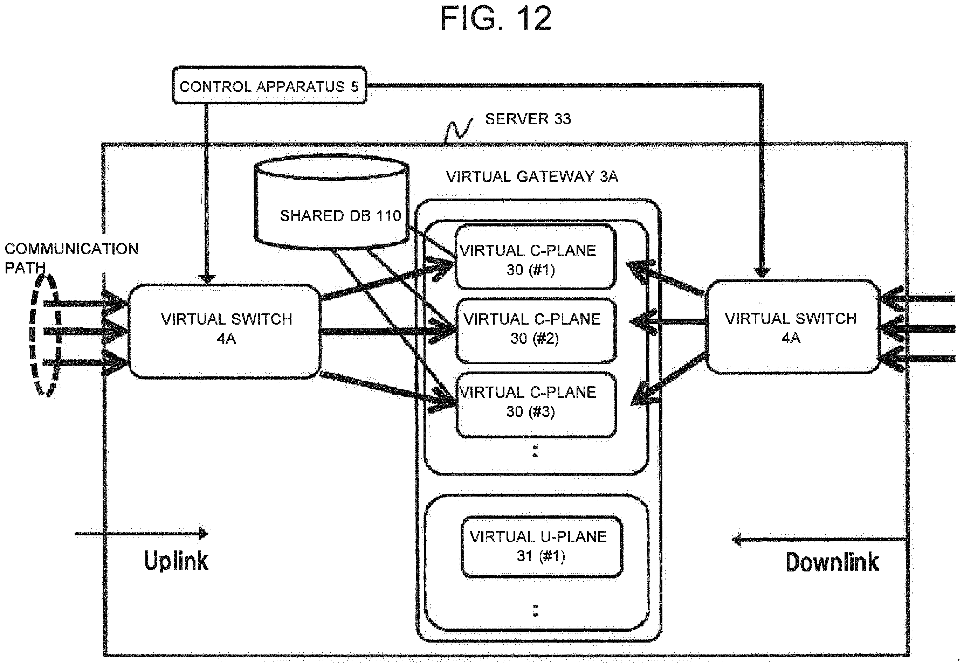

   Fig. 12 is a functional block diagram showing a second example of the communication system according to the fourth exemplary embodiment.
[Fig. 13]

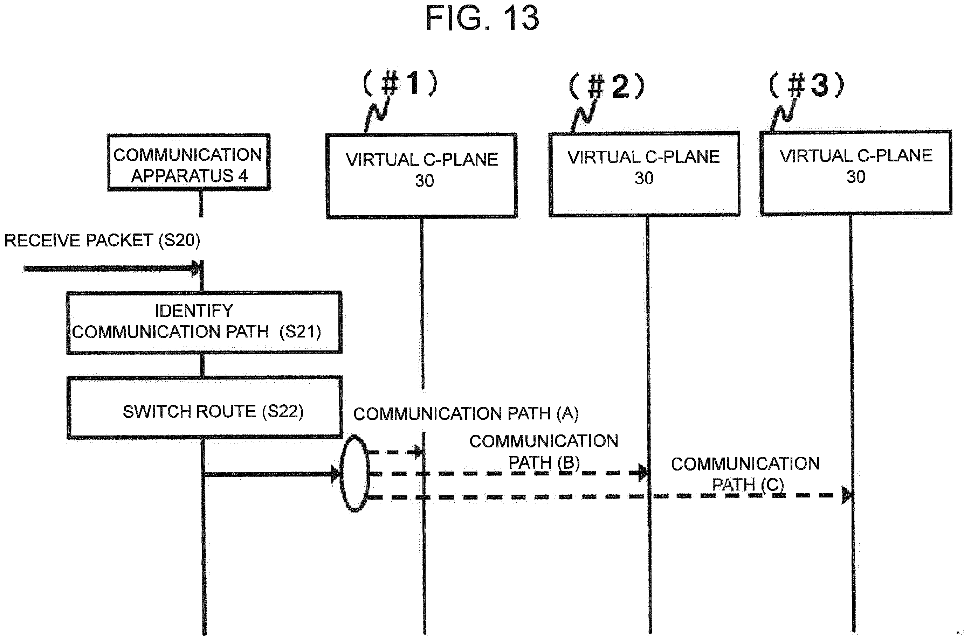

   Fig. 13 is a sequence chart showing an example of operation of the communication apparatus according to the fourth exemplary embodiment.
[Fig. 14]

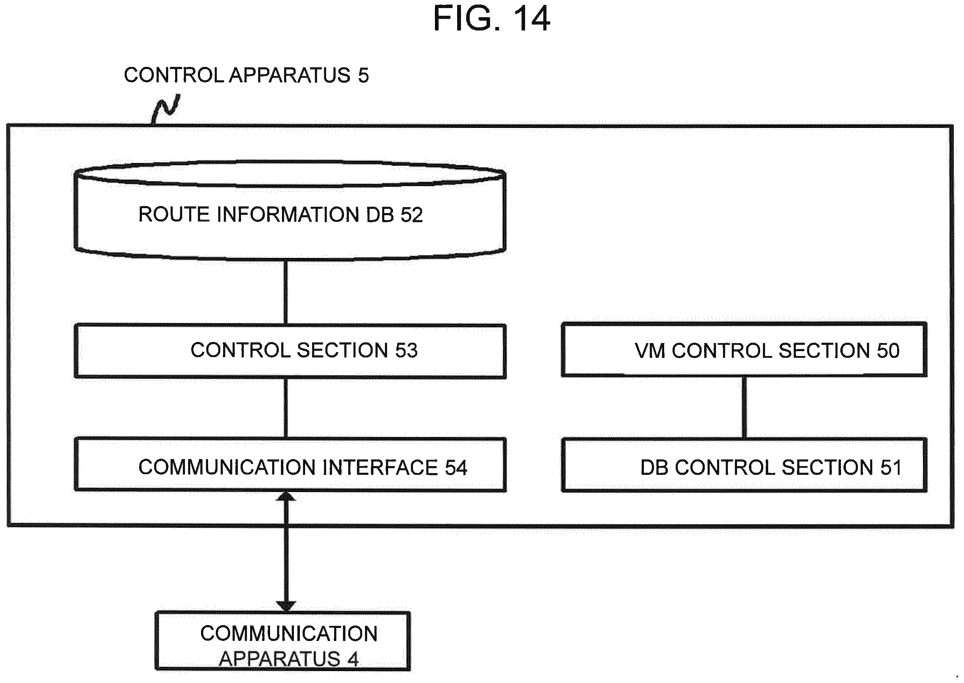

   Fig. 14 is a block diagram showing an example of the functional configuration of a control apparatus in the fourth exemplary embodiment.
[Fig. 15]

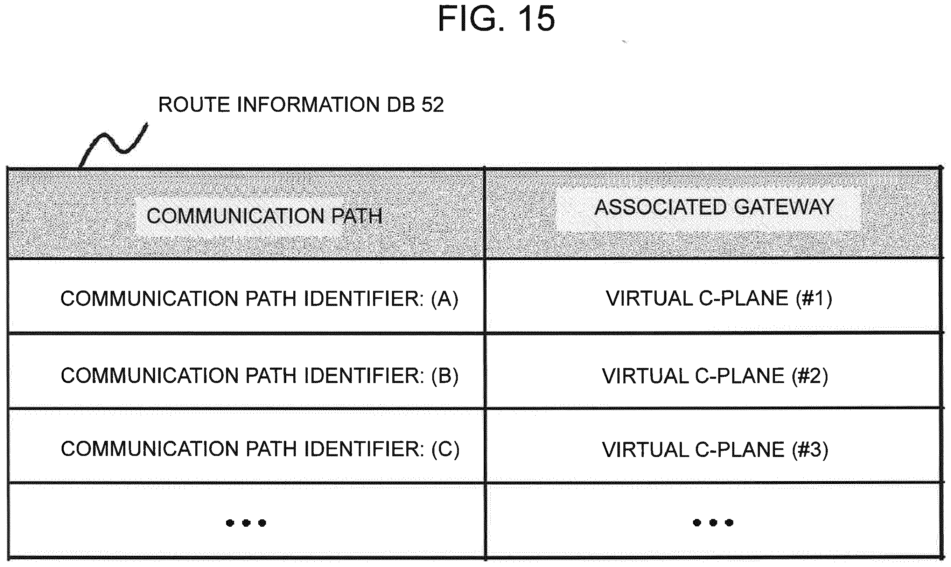

   Fig. 15 is a schematic diagram showing a first example of the structure of a route information DB provided to the control apparatus in the fourth exemplary embodiment.
[Fig. 16]

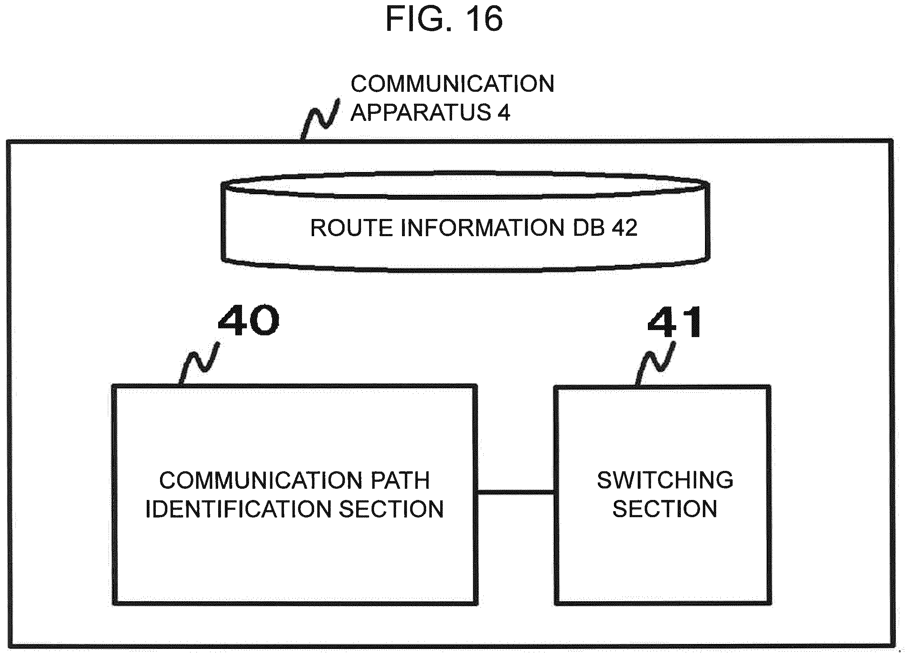

   Fig. 16 is a block diagram showing another example of the configuration of the communication apparatus in the fourth exemplary embodiment.
[Fig. 17]

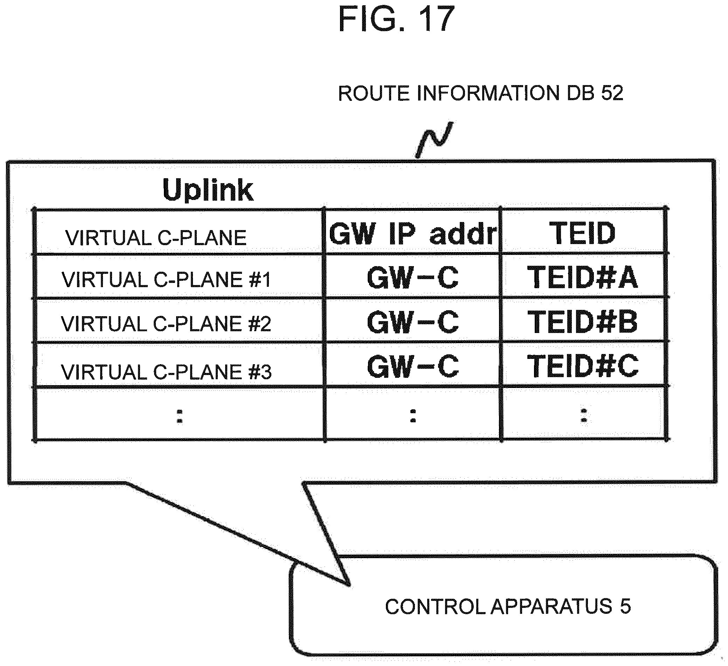

   Fig. 17 is a schematic diagram showing a second example of the structure of the route information DB provided to the control apparatus in the fourth exemplary embodiment.
[Fig. 18]

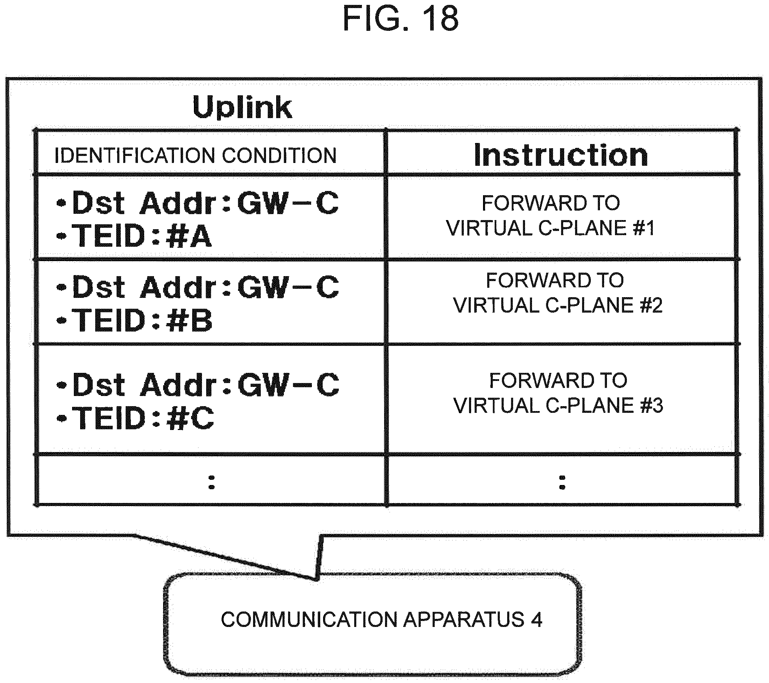

   Fig. 18 is a schematic diagram showing control information of the communication apparatus, corresponding to the route information DB of the control apparatus shown in
Fig. 17.
[Fig. 19]

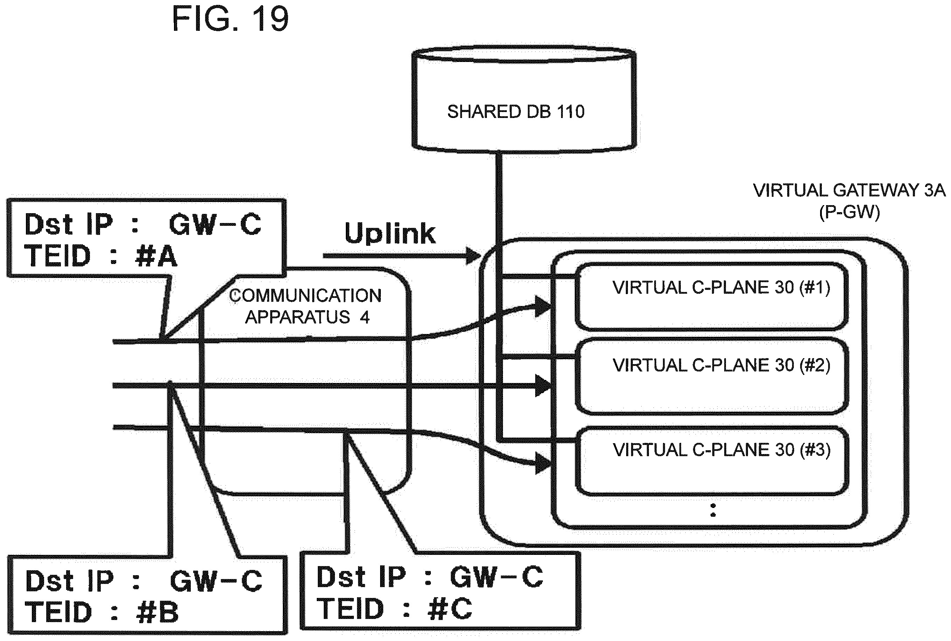

   Fig. 19 is a schematic diagram showing a first example of operation in the communication system according to the fourth exemplary embodiment.
[Fig. 20]

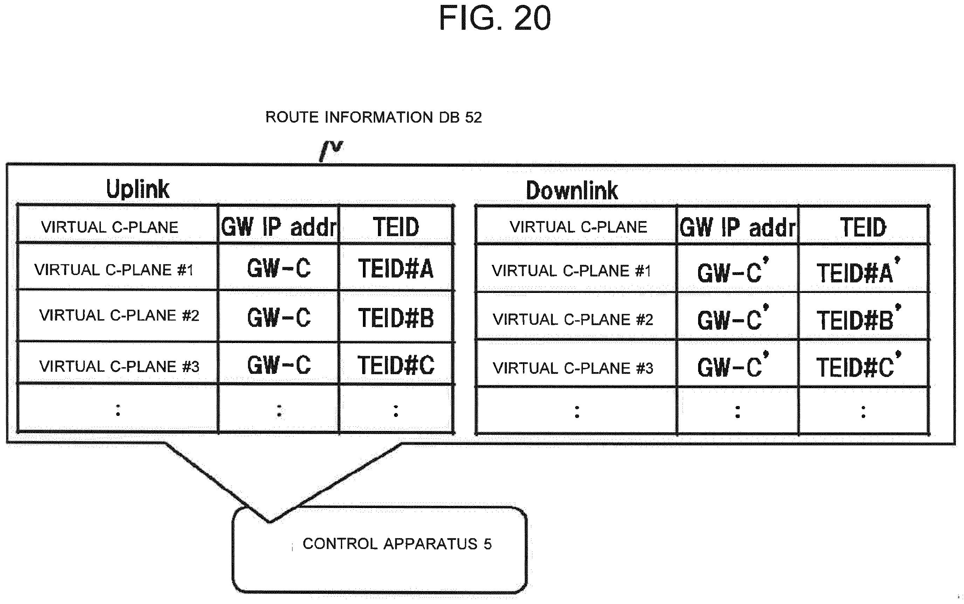

   Fig. 20 is a schematic diagram showing a third example of the structure of the route information DB provided to the control apparatus in the fourth exemplary embodiment.
[Fig. 21]

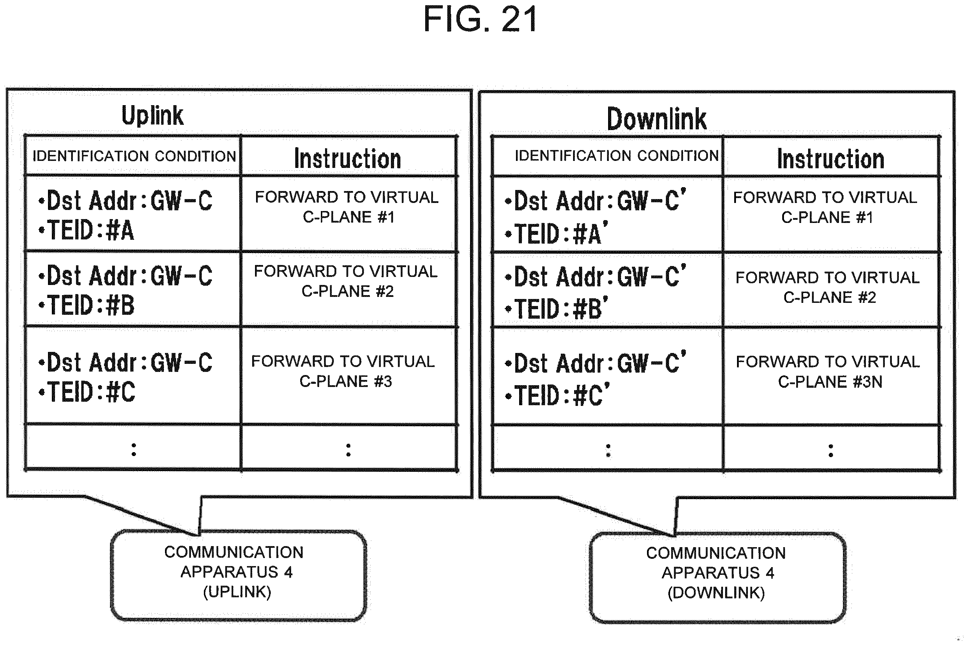

   Fig. 21 is a schematic diagram showing control information of the communication apparatuses, corresponding to the route information DB of the control apparatus shown in Fig. 20.
[Fig. 22]

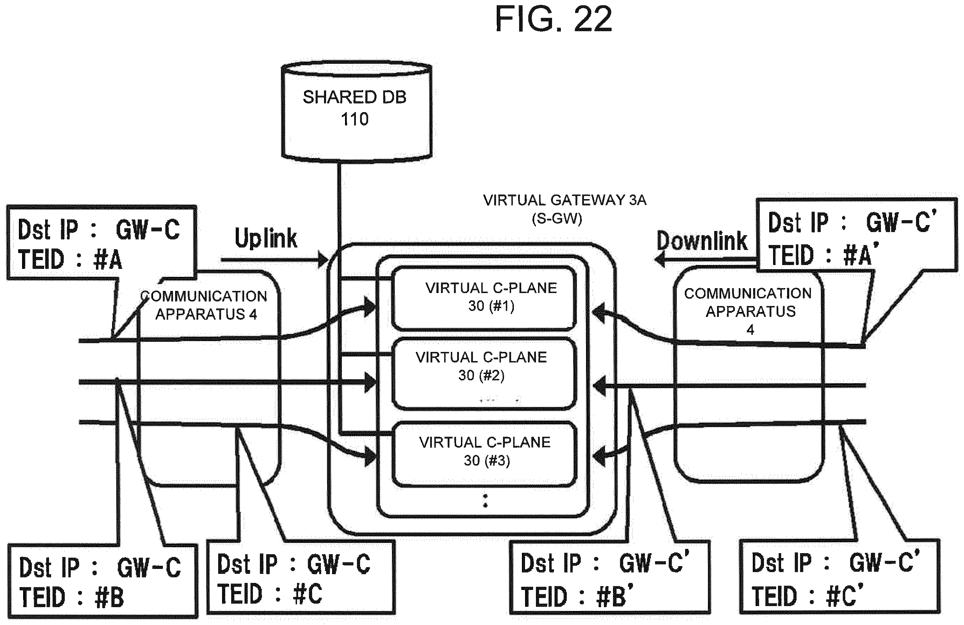

   Fig. 22 is a schematic diagram showing a second example of operation in the communication system according to the fourth exemplary embodiment.
[Fig. 23]

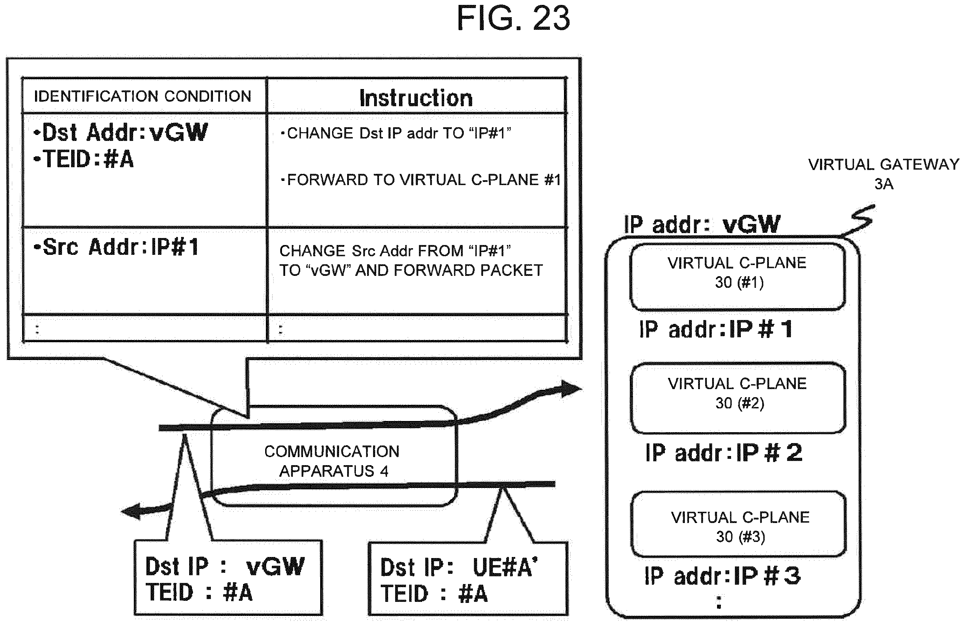

   Fig. 23 is a schematic diagram showing a third example of operation in the communication system according to the fourth exemplary embodiment.
[Fig. 24]

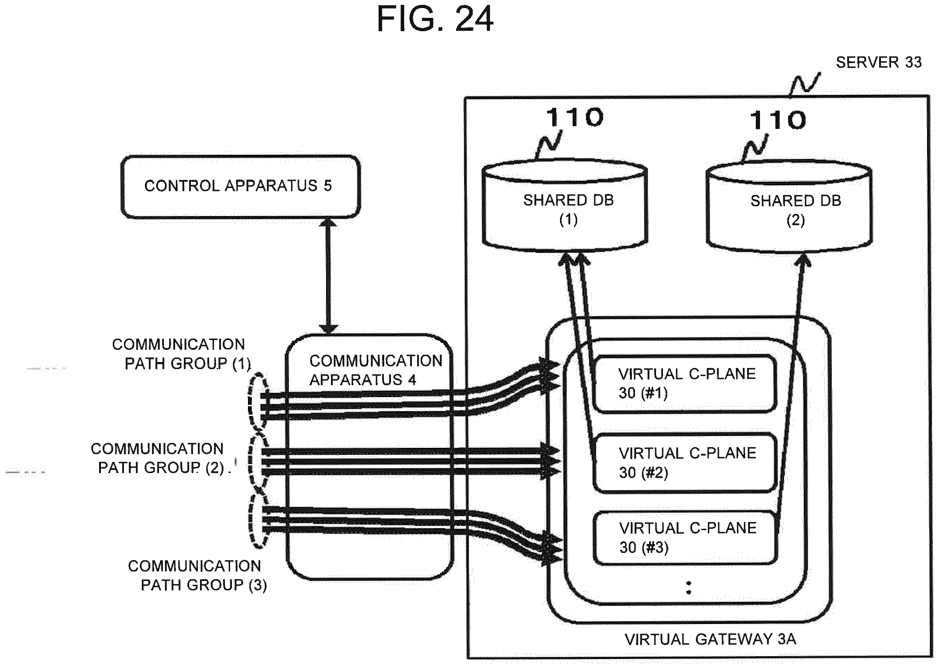

   Fig. 24 is a block diagram showing an example of the functional configuration of a communication system according to a fifth exemplary embodiment of the present invention.
[Fig. 25]

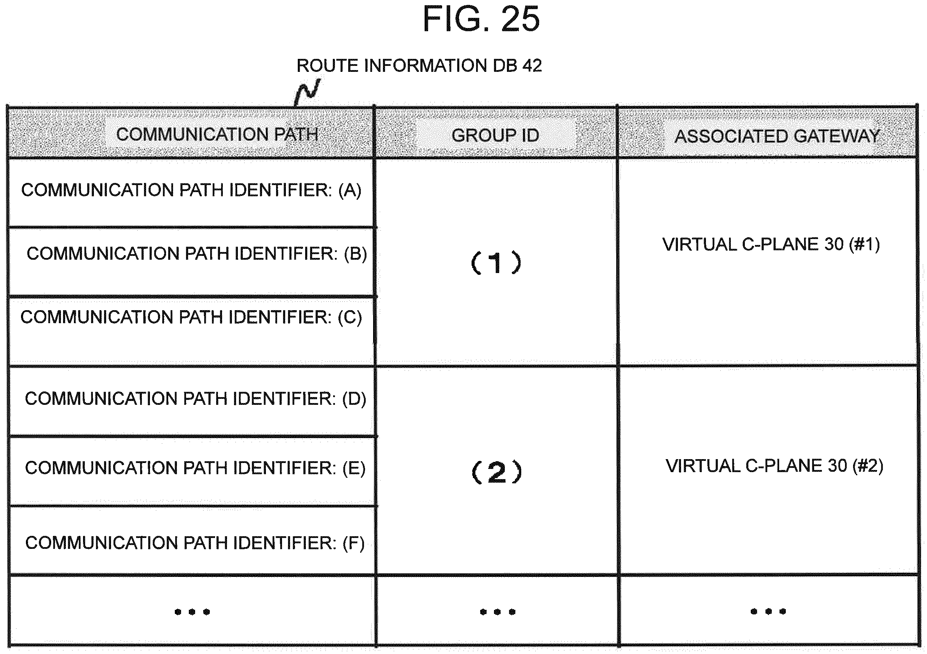

   Fig. 25 is a schematic diagram showing an example of the structure of a route information DB provided to a communication apparatus in the fifth exemplary embodiment.
[Fig. 26]

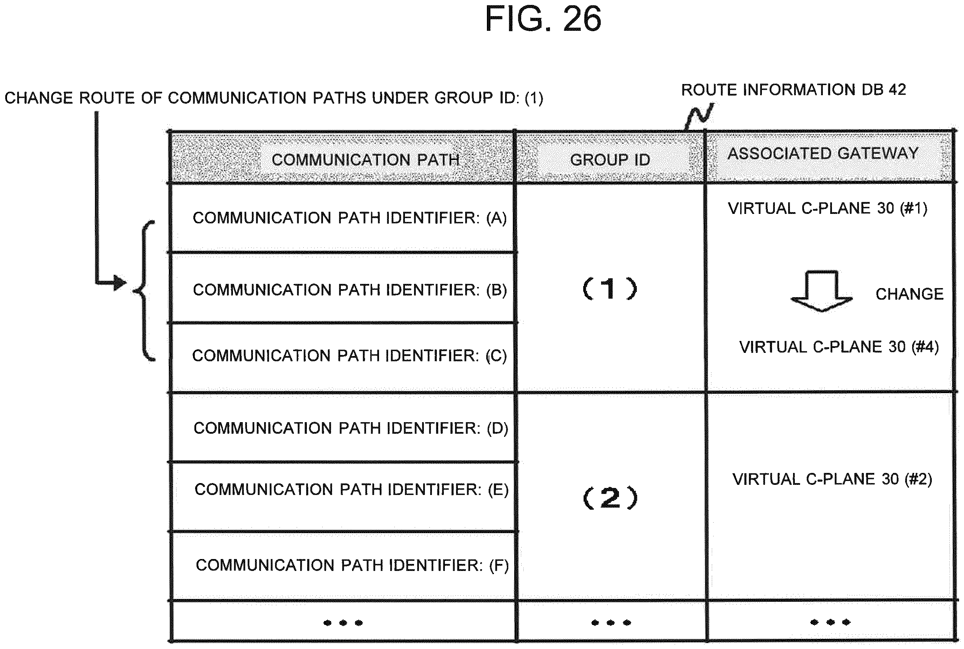

   Fig. 26 is a schematic diagram for describing operation at the time of changing an associated gateway in the route information DB shown in Fig. 25.

### [Detailed Description]

Hereinafter, preferred embodiments of the present invention will be described. Each embodiment is shown for illustration, and the present invention is not limited to each embodiment.

### 1. First exemplary embodiment

Hereinafter, an example of an LTE (Long Term Evolution) communication system will be shown as a communication system according to the present exemplary embodiment. However, communication systems to which the present invention is applied are not limited to those of LTE. For example, the present invention is also applicable to GPRS (General Packet Radio Service) and UMTS (Universal Mobile Telecommunication System).

### 1.1) System

Referring to Fig. 1, the communication system according to the first exemplary embodiment of the present invention includes a terminal (mobile terminal) 1 such as a mobile telephone, PC (Personal Computer), or mobile router, a base station (eNB) 2, a gateway 3, and an MME (Mobility Management Entity). The terminal 1 accesses a network such as the Internet via the base station 2 and gateway 3.

The base station 2 provides a radio access function to the terminal 1. The gateway 3 is a network node such as, for example, S-GW (Serving Gateway) or P-GW (Packet Data Network Gateway). Note that the gateway 3 may be SGSN (Serving GPRS Support Node) or GGSN (Gateway GPRS Support Node). For example, the gateway 3 provides a function of terminating a communication path (e.g., a bearer) configured in a network, and a function as a connecting point with an external network (e.g., the Internet). The MME 7 performs control related to terminal mobility, control related to communication path , authentication processing, and the like.

In the present exemplary embodiment, for example, the above-mentioned network functions provided by the MME 7 and gateway 3 are executed by using software such as virtual machine.

### 1.2) Construction of virtual network function

Fig. 2 shows an example of the configuration of a computer 10 that executes network functions by using software.

Virtual network functions (VNF) 100 can provide virtual machines with functions related to communication processing to be executed by entities in the communication system. The virtual network functions 100 can execute the functions of entities in the communication system, such as the MME 7 and gateway 3. For example, the virtual network functions 100 are configured by using software operating on virtual machines. Moreover, a virtual network function 100 may be configured for each of the various functions of the MME 7 and gateway 3. For example, P-GW has a function of processing a packet, a function of managing charging status according to communication (PCEF: Policy and Charging Enforcement Function), a function of controlling a policy such as QoS (PCRF: Policy and Charging Rule Function), and the like, and a virtual network function 100 may be configured for each of these functions.

A shared DB 110 is a database storing information related to communication status. For example, each virtual network function 100 activated on the computer 10 can refer to the shared DB 110 and acquire the communication status-related information. Moreover, for example, each virtual network function 100 can store communication status-related information that has been changed in accordance with communication processing in the shared DB 110. Note that the shared DB 110 may be provided outside the computer 10.

The communication status-related information is managed by the database shared among the virtual network functions 100, whereby a function of managing the communication status is separated from the virtual network functions 100. Since the communication status is managed by the shared DB 110, a virtual gateway can continue managing the communication status without being affected by the activation, deactivation, and the like of a virtual network function 100.

Moreover, even if communication processing that is being executed by a virtual network function 100 is migrated to a virtual network function 100 operating on another virtual machine, it is possible to avoid migration of the virtual network function 100 inclusive of the communication status. The migration-destination virtual network function 100 can manage the communication status relevant to the migration-source virtual network function 100 by referring to the shared DB 110.

For example, the shared DB 110 stores information indicating the state of a communication path (e.g., a bearer context) as the communication status-related information. The bearer context is described in, for example, sub-chapter 5.7 and others of a document (TS23.401 V12.3.0) that describes technical specifications about wireless communication (3GPP: 3rd Generation Partnership Project).

A control section 120 can perform, for example, the activation and deactivation of a virtual network function 100. Moreover, the control section 120 may have a switching function for controlling connections between the virtual network functions 100 and the shared DB 110. For example, the control section 120 can establish a connection between a virtual network function 100 newly activated and the shared DB 110. For example, in response to newly activating a virtual network function 100 on the computer 10, the switching function of the control section 120 can establish a connection between this virtual network function 100 and the shared DB 110. Moreover, for example, in response to migrating a virtual network function 100 to another virtual machine, the switching function of the control section 120 can establish a connection between the migrated virtual network function 100 and the shared DB 110.

For example, the control section 120 can select a shared DB 110 to be connected with a virtual network function 100, for each type of the virtual network functions 100. For example, a virtual network function 100 is constructed for each type of the entities in the communication system, such as the MME 7 and gateway 3. Moreover, for example, a virtual network function 100 is constructed for each type of the functions of the entities (PCRF and the like of a P-GW) in the communication system. Shared DBs 110 may be constructed for the types as described above, respectively. If shared DBs 110 are constructed for the types of the virtual network functions 100, respectively, the control section 120 can select a shared DB 110 to be connected with a virtual network function 100, depending on the type thereof.

For example, the control section 120 may connect only virtual network functions 100 of a predetermined type to the shared DB 100. It is conceivable that the frequency of updating the communication status varies with the types of the virtual network functions 100. For example, if a virtual network function 100 has the PCRF function, it performs management and the like of communication fees depending on the traffic volume. In this case, it is conceivable that the communication status is frequently updated because the virtual network function 100 always monitors traffic volumes and manages the communication status (i.e., communication fees). Assuming that the virtual network function 100 itself manages the communication status, the problem can arise that, when the virtual network function 100 is migrated to another virtual machine, the communication status is not accurately reflected on the migration-destination virtual machine unless the virtual network function 100 stops updating the communication status. Accordingly, virtual network functions 100 with a high frequency of updating the communication status manage the communication status by using the shared DB 110, whereby the above problem can be avoided.

On the other hand, there are virtual network functions 100 with a low frequency of updating the communication status. For example, a virtual network function 100 having a function for forwarding user packets updates the communication status at low frequency in comparison with the above-described PCRF and the like. For such virtual network functions 100, the necessity is not great to use the shared DB 110 for managing the communication status. In this case, such virtual network functions 100 may have a function of managing the communication status themselves without using the shared DB 110.

The control section 120 can store communication status-related information that has been changed in accordance with communication processing performed by a virtual network function 100 in the shared DB 110 via a connection established between the shared DB 110 and the virtual network function 100.

For example, the control section 120 can be configured by using control software that can execute computer virtualization, such as hypervisor.

The control section 120 can also control connections between the shared DB 110 that is provided outside the computer 10 and the virtual network functions 100.

### 1.3) Operation

Fig. 3 is a sequence chart showing an example of operation in the first exemplary embodiment.

The virtual network function 100 receives a message from another entity in the communication system (S1).

To process the message, the virtual network function 100 can acquire communication status-related information with respect to the message from the shared DB 110 (S2).

The virtual network function 100 performs message processing (S3). For example, if the virtual network function 100 executes the function of the MME 7, the virtual network function 100 processes a message concerning an attach procedure for the terminal 1 to connect to the network. For example, in response to an attach request message from the terminal 1, the virtual network function 100 performs processing for selecting an S-GW to establish a connection with the terminal 1, and the like. The virtual network function 100 may access the shared DB 110 and refer to communication status-related information required to perform the communication processing.

The virtual network function may write information in the shared DB 110, based on a change in the communication status or the like caused by the message processing (S4). For example, the virtual network function 100 stores the address of the S-GW selected in the attach procedure, as communication status-related information, in the shared DB 110.

Fig. 4 is a sequence chart showing an example of operation in the first exemplary embodiment. Fig. 4 shows an example of operation related to a connection between the virtual network function 100 and the shared DB 110.

The control section 120 performs activation or deactivation of the virtual network function 100 (S5).

The control section 120 performs establishment or release of a connection between the virtual network function 100 and the shared DB 110 in response to the activation or deactivation of the virtual network function 100 (S6).

### 2. Second exemplary embodiment

According to a second exemplary embodiment of the present invention, a control apparatus 5 performs control related to the virtual network functions 100. The control apparatus 5 performs centralized control of the virtual network functions 100, whereby a network operator's efficiency in operation and management is increased. The second exemplary embodiment is applicable to the technique disclosed in the above-described first exemplary embodiment.

### 2.1) Control apparatus

Fig. 5 shows an example of the configuration of the control apparatus 5. The control apparatus 5 includes a VM (Virtual Machine) control section 50 and a DB (DataBase) control section 51.

The VM control section 50 can control the activation of a virtual network function 100 on the computer 10. Moreover, the VM control section 50 can control the deactivation of a virtual network function 100 (the deletion of a virtual network function from the computer 10). For example, the VM control section 50 instructs the control section 120 of the computer 10 to activate or deactivate a virtual network function 100. In response to the instruction from the VM control section 50, the control section 120 performs activation or deactivation of the virtual network function 100 on the computer 10.

For example, the VM control section 50 can also control the migration of a virtual network function 100. For example, the VM control section 50 can migrate a virtual network function 100 to another virtual machine. For example, the VM control section 50 instructs the control section 120 of the computer 10 to migrate a virtual network function 100. The control section 120, in response to the instruction, migrates the virtual network function 100 from a migration-source virtual machine to a migration-destination virtual machine.

The DB control section 51 controls connections between the virtual network functions 100 and the shared DB 110. For example, in response to the activation, deactivation, or the like of a virtual network function 100, the DB control section 51 instructs the control section 120 of the computer 10 to establish or delete a connection between the virtual network function 100 and the shared DB 110.

For example, the DB control section 51 can select a shared DB 110 to be connected with a virtual network function 100, for each type of the virtual network functions 100. The DB control section 51 can instruct the control section 120 of the computer 10 to connect a shared DB 110 corresponding to the type of a virtual network function 100 with this virtual network function 100. If a plurality of shared DBs 110 are constructed correspondingly to the types of the virtual network functions 100, the DB control section 51 can select a shared DB 110 to be connected with a virtual network function 100 from among the plurality of shared DBs 110, based on the type of the virtual network function 100.

For example, the DB control section 51 may connect only virtual network functions 100 of a predetermined type with the shared DB 110.

Note that the control apparatus 5 may be configured not to include the DB control section 51. For example, if the control section 120 has a function of establishing or deleting a connection between a virtual network function 100 and the shared DB 110, the control apparatus 5 can be implemented with a configuration not including the DB control section 51.

Other than the foregoing, the VM control section 50 and DB control section 51 can also execute, for example, the functions of the control section 120 illustrated in the above-described first exemplary embodiment and other various functions, which will be illustrated in the under-described exemplary embodiments.

### 2.2) Operation

Fig. 6 is a sequence chart showing an example of operation in the second exemplary embodiment.

The VM control section 50 of the control apparatus 5 notifies an instruction for controlling a virtual network function 100 to the control section 120 of the computer 10 (S10). For example, the control apparatus 5 notifies the control section 120 of a control instruction related to the activation, deactivation, migration, or the like of a virtual network function 100.

The control section 120, in response to the instruction, performs activation, deactivation, migration, or the like of the virtual network function 100 (S11).

The DB control section 51 of the control apparatus 5 can notify the control section 120 of an instruction for controlling a connection between the virtual network function 100 and the shared DB 110 (S12).

The control section 120, in response to the control instruction from the DB control section 51, can perform establishment or release of a connection between the virtual network function 100 and the shared DB 110 (S13).

### 3. Third exemplary embodiment

A third exemplary embodiment of the present invention shows examples of the configuration of an interface between the virtual network function 100 and the shared DB 110. The third exemplary embodiment is also applicable to any of the techniques disclosed in the above-described first and second exemplary embodiments.

### <First example>

The virtual network function 100 uses an access key related to communication status to access the shared DB 110, as illustrated in Fig. 7.

For example, the shared DB 110 stores communication status-related information (e.g., a bearer context) for each terminal 1. For example, the virtual network function 100 accesses the shared DB 110 by using, as an access key, information with which a terminal 1 can be identified. For example, the virtual network function 100 uses IMSI (International Mobile Subscriber Identity), TEID (Tunnel Endpoint ID), or the like as an access key. For example, if the virtual network function 100 performs communication processing with respect to a terminal 1, the virtual network function 100 refers to a bearer context with respect to the terminal 1 by using IMSI or TEID. Note that the virtual network function 100 can also use other information than IMSI and TEID to access the shared DB 110.

The virtual network function 100 can use the access key as a pointer to the shared DB 110. For example, when accessing the shared DB 110, the virtual network function 100 notifies the control section 120 of an access key that is a pointer to the shared DB 110. Based on the pointer notified from the virtual network function 100, the control section 120 determines the access-target shared DB 110, information of the access target, and the like, and acquires communication status-related information from the shared DB 110. The control section 120 provides the acquired information to the virtual network function 100.

### <Second example>

Fig. 8 shows another example of the interface between the virtual network function 100 and the shared DB 110. In the example of Fig. 8, a shared DB to be allocated to each virtual network function 100 is selected from among a plurality of shared DBs 110. In the example of Fig. 8, a shared DB 110(1) is allocated to virtual network functions 100(A) and 100(B), and a shared DB 110(2) is allocated to virtual network functions 100(a) and 100(b). Each virtual network function 100 accesses the allocated shared DB 110 and refers to communication status-related information.

For example, each shared DB 110 is selected depending on the type of a virtual network function 100. For example, each shared DB 110 stores communication status according to the type of a virtual network function 100. For example, if a virtual network function 100 virtually executes the function of the MME 7, this virtual network function 100 is connected with a shared DB 110 corresponding to the function of the MME 7.

Each shared DB 110 may be configured as an application operating on a virtual machine. The control section 120 of the computer 10 can activate the application having the function of the shared DB 110 on the computer 10 similarly to the virtual network function 100.

It is conceivable that the installation of a virtual network function 100 causes an increase in the number of virtual network functions 100 that access the shared DB 110, resulting in the increased load on the shared DB 110. In the example of Fig. 8, a shared DB 110 can be easily installed in accordance with the installation of a virtual network function 100. Accordingly, in the example of Fig. 8, the effect can be obtained that it is possible to easily achieve scale-out of the system by installation of a virtual network function 100.

### <Third example>

Fig. 9 shows another example of the interface between the virtual network function 100 and the shared DB 110. In the example of Fig. 9, a switching function 130 controls connections between the virtual network functions 100 and the shared DBs 110. The switching function 130 is a function of the computer 10. For example, the switching function 130 may be deployed in the control section 120 of the computer 10.

For example, if a shared DB to be allocated to each virtual network function 100 is selected from among a plurality of shared DBs 110 as in the example of Fig. 8, the switching function 130 configures a communication path connecting each virtual network function 100 and a shred DB 110 allocated to the virtual network function 100. Note that a plurality of switching functions 130 may be deployed between the virtual network functions 100 and the shared DBs 110.

For example, the switching function 130 can select a shared DB 110 to be connected with a virtual network function 100, depending on the type of this virtual network function 100.

### 4. Fourth exemplary embodiment

A fourth exemplary embodiment of the present invention is also applicable to any of the techniques disclosed in the above-described first to third exemplary embodiments. In the fourth exemplary embodiment, the function of the gateway 3 are executed by a virtual network function 100.

According to the fourth exemplary embodiment, if the function of the gateway 3 is dynamically scaled out, it is possible to switch a gateway 3 associated with a communication path (e.g., a bearer). A communication apparatus 4 switches a packet forwarding path on the route of a communication path, whereby the communication apparatus 4 can hide the switching of a gateway 3 associated with the communication path from a terminal 1. Accordingly, even if a gateway 3 associated with a communication path is switched, the communication system can avoid performing a procedure for reestablishing a communication path. Even if the virtual network function 100 having the function of the gateway 3 is dynamically scaled out, the virtual network functions 100 can continuously provide communication services because the procedure for reestablishing a communication path can be avoided.

Further, in the fourth exemplary embodiment, communication status-related information is managed by a database shared among the virtual network functions 100, whereby a function of managing the communication status is separated from the virtual network functions 100. Since the communication status is managed by the shared DB 110, the virtual gateway can continue managing the communication status without being affected by the dynamic scale-out of the virtual network functions 100.

As described above, according to the fourth exemplary embodiment, even if the virtual network function 100 is dynamically scaled out, the virtual gateway can continue providing the communication services and managing the communication status. Accordingly, the technique according to the fourth exemplary embodiment can provide a highly available and reliable virtualization technique to network operators.

The gateway 3 has a control plane (C-Plane) and a user plane (U-Plane). The C-Plane has a function of processing control signals transmitted in the communication system. The U-Plane has a function of processing data transmitted in the communication system.

A communication path (e.g., a bearer) is established between the gateway 3 and a terminal 1 for the terminal 1 to communicate with an external network such as the Internet. Over the communication path, the gateway 3 performs communication by using, for example, an IP address assigned to the gateway 3. The gateway 3 constructs a tunnel for establishing the communication path. The tunnel is, for example, a GTP (GPRS Tunneling Protocol) tunnel, a GRE (Generic Routing Encapsulation) tunnel, or the like.

### 4.1) System

In the fourth exemplary embodiment, the gateway 3 is configured as a virtual gateway 3A by using software such as virtual machine, as illustrated in Fig. 10. For example, the virtual gateway 3A is constructed on a server 33. For example, the server 33 includes the functions of the computer 10 in the exemplary embodiments described above. In the virtual gateway 3A, the C-Plane and U-Plane are configured by using virtual network functions 100, as shown in Fig. 10. Virtual network functions 100 corresponding to the C-Plane and U-Plane are referred to as "virtual C-planes 30" and "virtual U-planes 31 ", respectively. The virtual C-planes 30 and virtual U-planes 31 can communicate with each other via internal interfaces. The operator of the communication system can perform installation, uninstallation, migration, and the like of a virtual C-plane 30 and/or a virtual U-plane 31, for example, depending on the load on the communication system or the like. Since the virtual C-planes 30 and virtual U-planes 31 are configured by using software, the operator can perform installation, uninstallation, migration, and the like with ease and at a low cost in comparison with performing installation, uninstallation, migration, and the like of a hardware gateway 3.

The virtual C-Plane 30 provides a function of exchanging communication path information with a node serving as a terminating point of an adjacent communication path, a function of assigning information required for the communication path, and the like.

The virtual U-Plane 31 provides a function of terminating a communication path, and a function of serving as a connecting point with an external network.

In the virtual gateway 3A, if an IP address is assigned to each of the virtual C-Planes 30 and virtual U-Planes 31, it is conceivable that the reestablishment of a communication path occurs when a virtual C-plane and/or a virtual U-plane is installed. For example, when a virtual U-plane 31 is installed, a new IP address is assigned to the installed virtual U-plane 31. If a communication path configured with an existing virtual U-plane 31 is switched to the installed virtual U-plane 31, the IP address associated with the communication path is changed to the IP address assigned to the installed virtual U-plane 31, and consequently the reestablishment of a communication path occurs. To reestablish a communication path, each function included in the communication system, such as eNB, SGW, and PGW, performs a procedure for reestablishing the communication path. Accordingly, it is conceivable that the reestablishment of a communication path occurs each time a virtual C-plane and/or a virtual U-plane 31 is installed, which can greatly affect the performance and the like of the communication system.

According to the fourth exemplary embodiment, an IP address is not assigned to each of the virtual C-planes 30 and virtual U-planes 31, but, for example, common IP addresses are assigned to the virtual U-planes and virtual C-planes. That is, a common IP address is assigned to a plurality of virtual C-planes or a plurality of virtual U-planes. Accordingly, for example, when a virtual C-plane 30 to be included in the C-plane is installed, the reestablishment of a communication path can be avoided even if a communication path is switched between virtual C-planes 30 because a common IP address is assigned to the virtual C-planes 30. Note that a common address to be assigned to a plurality of virtual C-Planes or a plurality of virtual U-Planes is not limited to an IP address, but may be a MAC address.

Referring to Fig. 10, the communication system according to the fourth exemplary embodiment includes the virtual gateway 3A, communication apparatuses 4, and a control apparatus 5. In the example of Fig. 10, the shared DB 110 is included in the server 33, but the present invention is not limited to the architecture shown in Fig. 10. For example, the shared DB 110 may be an external storage. The virtual gateway 3A on the server 33 accesses the shared DB 110 composed of such an external storage and manages the communication status.

The virtual gateway 3A includes the virtual C-planes 30 and virtual U-planes 31. For example, the virtual C-Planes 30 and virtual U-Planes 31 are configured on the server 33 by using software such as VM.

### 4.2) Communication apparatus

Fig. 11 shows an example of the configuration of the communication apparatus 4. The communication apparatus 4 includes a communication path identification section 40 and a switching section 41.

The communication path identification section 40 identifies a communication path to which a received packet belongs. For example, the communication path identification section 40 identifies a communication path to which a received packet belongs, based on a communication path identifier such as TEID (Tunnel Endpoint Identifier) or GRE (Generic Routing Encapsulation) key. Note that the destination address of a received packet is assumed to be an IP address common to a plurality of virtual C-Planes 30 or a plurality of virtual U-Planes 31.

The switching section 41 forwards a received packet to a virtual gateway 3A (a virtual C-Plane 30 and a virtual U-Plane 31) associated with a communication path, which is identified based on a communication path identifier. For example, the switching section 41 has a function of managing associations between the communication paths and the virtual gateways 3A and, based on the associations, forwards a received packet to its associated virtual gateway 3. In the example of Fig. 10, the switching section 41 forwards uplink communication paths (A), (B), and (C) to virtual C-Planes (#1), (#2), and (#3), respectively.

As described above, the communication apparatus 4 can distribute packets sent to the IP address common to the plurality of virtual gateways 3A (virtual C-planes or virtual U-planes), to their respective associated virtual gateways 3A based on the communication paths. Accordingly, the communication apparatus 4 can mask the plurality of virtual gateways 3A as logically a single common gateway from the other ends of communication of the virtual gateways 3A.

It is also possible to implement the above-described functions of the communication apparatus 4 by using a virtual switch 4A constructed on the server 33, as illustrated in Fig. 12. In the example of Fig. 12, the server 33 can operate as the communication apparatus 4. That is, it is also possible that the virtual switches 4A and the virtual gateway 3A are configured on a control section (not shown) of the server 33 by using software such as virtual machine.

Note that Figs 10 to 12 only show one communication apparatus 4 (virtual switch 4A), but a plurality of them may be used. Moreover, the communication apparatus 4 and virtual switch 4A may be used in combination.

Fig. 13 is a sequence chart showing an example of operation of the communication apparatus 4. When the communication apparatus 4 receives a packet (Operation S20), the communication path identification section 40 identifies a communication path to which the received packet belongs (Operation S21). For example, the communication path identification section 40 identifies a communication path to which the received packet belongs, based on a communication path identifier such as TEID or GRE Key.

The switching section 41 of the communication apparatus 4 forwards the received packet to a virtual network function 100 (e.g., a virtual C-Plane 30 or a virtual U-Plane 31) associated with the identified communication path (Operation S22).

### 4.3) Control apparatus

The control apparatus 5 manages associations between the communication paths and the virtual gateways 3A. For example, the control apparatus 5 has a function of managing associations between the communication paths and the virtual U-planes 31. Moreover, for example, the control apparatus 5 has a function of managing associations between the communication paths and the virtual C-Planes 30.

The control apparatus 5 has a function of controlling the operation of the communication apparatus 4. The control apparatus 5 instructs the communication apparatus 4 to identify a communication path to which a received packet belongs and to forward the received packet to a virtual U-Plane 31 or a virtual C-Plane 30 associated with the identified communication path.

Referring to Fig. 14, the control apparatus 5 includes a route information DB (DataBase) 52, a control section 53, and a communication interface 54. The other configuration is similar to that of the second exemplary embodiment.

The communication interface 54 has a function of communicating with the communication apparatus 4. For example, the communication interface 54 can communicate with the communication apparatus 4 by using a protocol such as OpenFlow, ForCES (Forwarding and Control Element Separation), or I2RS (Interface to routing System).

The route information DB 52 is a database for managing associations between the communication paths and the gateways 3. The control section 53 has a function of generating information to be stored in the route information DB 52, a function of controlling the communication apparatus 4 via the communication interface 54 based on the information stored in the route information DB 52, and the like.

The route information DB 52 stores association information about each communication path and its associated virtual gateway, as illustrated in Fig. 15. A communication path identifier such as TEID or GRE Key can be used as information for identifying a communication path, and an associated virtual gateway can be managed based on each communication path identifier. The example of Fig. 15 shows the route information DB 52 that corresponds to the architecture example shown in Fig. 10. In the example of Fig. 15, for example, a communication path of communication path identifier "A" is associated with the virtual C-Plane (#1).

The control section 53 controls the communication apparatus 4, based on the information managed by the route information DB 52. For example, the control section 53, based on the route information DB 52, notifies an association between a communication path and a virtual gateway to the switching section 41 of the communication apparatus 4.

Note that, as another example of the communication apparatus 4, the communication apparatus 4 may be provided with a route information DB 42 to store route information notified from the control apparatus 5, as illustrated in Fig. 16. In this case, the communication path identification section 40 and switching section 41 of the communication apparatus 4 refer to the route information DB 42 and forward a packet to a gateway 3 associated with a communication path to which this packet belongs.

For example, when a gateway 3 associated with a communication path is changed, the control section 53 of the control apparatus 5 notifies the communication apparatus 4 of information about the changed association. The communication apparatus 4 stores the notified information in the route information DB 42.

The VM control section 50 of the control apparatus 5 controls the activation, deactivation, migration, and the like of a virtual gateway 3A (a virtual C-Plane 30 and a virtual U-Plane 31). The DB control section 51 of the control apparatus 5 controls connections between the virtual C-planes 30 or virtual U-planes 31 and the shared DB 110.

Note that the functions of the control apparatus 5 may be configured on the server 33 by using software such as virtual machine.

The following description related to the fourth exemplary embodiment will be given based on the system architecture illustrated in Fig. 10. However, the present exemplary embodiment is not limited to the system architecture of Fig. 10 but also includes that of Fig. 12 and other modes made by modification of, substitution of, and adjustment to these system architectures.

### 4.4) First example of operation

Fig. 17 shows an example of the route information DB 52 in case where the virtual gateway 3A is a P-GW.

In the example of Fig. 17, the control apparatus 5 manages communication path information and information about virtual C-Plane 30 associated with the communication path identified by the communication path information ("virtual C-Plane" in Fig. 17). The information about virtual C-Plane 30 includes, for example, the identifier of the virtual C-Plane 30. The communication path information includes, for example, an IP address assigned to the virtual C-planes ("GW IP addr" in Fig. 17) and communication path identifiers (TEID in Fig. 17). Note that "GW IP addr" in Fig. 17 is a common IP address assigned to the virtual C-Planes 30. Although Fig. 17 shows an example with respect to virtual C-Planes 30, the route information DB 52 also manages information about virtual U-Planes 31.

The control apparatus 5 manages the above-mentioned GW IP addr and TEID as communication path information for uplink communication (communication from S-GW toward P-GW). Fig. 17 shows that, for example, a communication path whose "GW IP addr" is GW-C and "TEID" is TEID #A is associated with the virtual C-Plane #1.

A P-GW is a node terminating a communication path. Accordingly, the control apparatus 5 does not need to manage communication path information for downlink communication.

In the example of Fig. 17, an IP address is not assigned to each virtual C-plane 30, but a common IP address ("GW-C" in Fig. 17) is assigned to the virtual C-planes. Apart from such an assignment method, it is also possible that a plurality of IP addresses (e.g., "GW-C #1" and "GW-C #2") are assigned to the virtual C-planes. For example, it is possible to employ an assignment method in which "GW-C #1" is assigned to virtual C-Planes #1-#n, and "GW-C #2" is assigned to virtual C-Planes #m-#x.

Fig. 18 shows an example of control information that is set on the communication apparatus 4 by the control apparatus 5 based on the route information DB 52. Fig. 18 shows an example of the control information in case where the virtual gateway 3A is a P-GW.

The control apparatus 5 notifies control information for processing a received packet to the communication apparatus 4 that processes uplink communication.

In the example of Fig. 18, the control information notified to the communication apparatus 4 for uplink communication includes an identification condition and an "instruction". The identification condition indicates a condition for identifying a packet based on an IP address for the virtual C-planes that is the destination address of the packet ("Dst Addr" in Fig. 18) and TEID. Moreover, the "instruction" indicates a method for processing a packet that matches the identification condition. In the example of Fig. 18, when identifying a packet whose destination address (Dst Addr) is "GW-C" and TEID is "#A", this packet is instructed to be forwarded to the "virtual C-plane #1".

A P-GW is a node terminating a communication path. Accordingly, the control apparatus 5 does not need to notify control information for processing a received packet to the communication apparatus 4 that processes downlink communication.

In an example as shown in Fig. 19, the communication apparatus 4 forwards a received packet to a virtual C-plane 30 in accordance with the control information illustrated in Fig. 18. More specifically, the communication apparatus 4 searches for an identification condition corresponding to a received packet and forwards the received packet to a virtual C-plane 30 in accordance with an "instruction" corresponding to the retrieved identification condition.

For example, in the uplink-side communication apparatus 4, a packet addressed to the virtual gateway 3A (a packet whose Dst Addr is "GW-C") is forwarded to a virtual C-plane 30 depending on TEID. In the example of Fig. 19, a packet with TEID "#A" is forwarded to the virtual C-plane #1, a packet with TEID "#B", the virtual C-plane #2, and a packet with TEID "#C", the virtual C-plane #3.

Each virtual C-Plane 30 refers to the communication status-related information in the shared DB 110, for example, based on a TEID in a received packet. For example, each virtual C-Plane 30 acquires a bearer context with respect to a communication path from the shared DB 110 based on a TEID in a received packet. Moreover, each virtual C-Plane 30 accesses a bearer context in the shared DB 110 based on a TEID in a received packet and writes communication status-related information that has been changed through communication processing into the shared DB 110.

### 4.5) Second example of operation

Fig. 20 shows an example of the route information DB 52 in case where the virtual gateway 3A is an S-GW.

In the example of Fig. 20, the control apparatus 5 manages communication path information and information about virtual C-Planes 30 associated with communication paths identified by the communication path information ("virtual C-Plane" in Fig. 20). Note that "GW IP addr" in Fig. 20 is a common IP address assigned to the virtual C-Planes 30. Although Fig. 20 shows an example with respect to virtual C-Planes 30, the route information DB 52 also manages information about virtual U-Planes 31.

In the example of Fig. 20, the route information DB 52 for uplink communication has a structure similar to the example of Fig. 17. Moreover, in the example of Fig. 20, the structure of the route information DB 52 for downlink communication is similar to that of the route information for uplink. However, in the example of Fig. 20, "GW IP Addr" for downlink is different from an address for uplink. "GW IP Addr" for downlink is "GW-C"'. In the example of Fig. 20, TEIDs for downlink are different from those of uplink. In the example of Fig. 20, a TEID for uplink associated with the virtual C-Plane #1 is "#A", and a TEID for downlink is "#A"'.

Fig. 21 shows an example of control information to be set on the communication apparatuses 4 by the control apparatus 5. The control information shown in Fig. 21 has a structure similar to the control information in the communication apparatus 4 for uplink shown in Fig. 18. In the example of Fig. 21, an identification condition in the control information includes a destination address that is the virtual gateway 3A and TEID. Moreover, an "instruction" in the control information includes information about a virtual C-Plane to be the forwarding destination of a packet.

In an example shown in Fig. 22, the communication apparatuses 4 forward a received packet to a virtual C-plane 30 in accordance with the control information illustrated in Fig. 21. More specifically, each communication apparatus 4 searches for an identification condition corresponding to a received packet and forwards the received packet to a virtual C-plane 30 in accordance with an "instruction" corresponding to the retrieved identification condition. In the example of Fig. 22, each of the communication apparatus 4 for uplink and the communication apparatus 4 for downlink identifies a communication path based on the destination address of and a TEID in a received packet and forwards the received packet to a virtual C-Plane 30 associated with this communication path.

Each virtual C-Plane 30 refers to the communication status-related information in the shared DB 110, for example, based on a TEID in a received packet. For example, each virtual C-Plane 30 acquires a bearer context with respect to a communication path from the shared DB 110 based on a TEID in a received packet. Moreover, each virtual C-Plane 30 accesses a bearer context in the shared DB 110 based on a TEID in a received packet and writes communication path-related information that has been changed through communication processing into the shared DB 110.

Note that the above-described examples shown in Figs. 10 to 22 are examples of virtual C-planes, but the present invention is also applicable to virtual U-planes.

Moreover, in Figs. 10 to 22, control of a packet toward a virtual U-plane is described, but the control apparatus 5 may control a packet that has passed a virtual U-plane. For example, it is only necessary that the control apparatus 5 perform control of a packet that has passed a virtual C-plane, based on the destination IP address.

Further, in the fourth exemplary embodiment, examples are shown in which a communication path is allocated to a virtual C-Plane or a virtual U-Plane, but it is also possible that a communication path is allocated to a virtual gateway 3A.

Furthermore, in the third exemplary embodiment, examples are shown in which a P-GW and an S-GW each operate solely, but it is also possible that both P-GW and S-GW functions coexist on a single virtual U-plane.

### 4.6) Third example of operation

In the above-described examples, examples are shown in which a common IP address is assigned to virtual U-Planes constituting virtual gateways 3A. However, the present invention is not limited to these examples. For example, the present invention is also applicable to an example utilizing NAT (Network Address Translation).

Referring to Fig. 23, it is assumed that IP address "vGW" is assigned to the virtual gateway 3A, and that different IP addresses (e.g., "IP#1") are assigned to virtual C-Planes, respectively.

The communication apparatus 4, when receiving a packet whose destination address is "vGW", translates the destination address based on a TEID in the packet. For example, when TEID is "#A", the communication apparatus 4 translates the destination address from "vGW" to the IP address "IP#1" of the virtual C-Plane #1 associated with TEID #A.

The communication apparatus 4, when receiving a packet whose source address is the IP address of a virtual C-Plane, translates the source address to the IP address "vGW" of the virtual gateway 3A.

Note that when NAT is performed, a MAC address may be translated along with an IP address. In this case, MAC address "vGW_MAC" is assigned to the virtual gateway 3A, and different MAC addresses (e.g., "MAC #1") are assigned to virtual C-Planes, respectively.

The communication apparatus 4 hides the IP address of a virtual C-Plane by using NAT as in the example of Fig. 23, whereby it is possible to avoid the occurrence of a procedure for reestablishing a communication path even if a virtual C-Plane associated with a communication path is changed.

### 5. Fifth exemplary embodiment

According to a fifth exemplary embodiment of the present invention, a control apparatus 5 groups communication paths and allocates a group including a plurality of communication paths to a virtual gateway 3A. The fifth exemplary embodiment is also applicable to any of the techniques disclosed in the above-described first to fourth exemplary embodiments.

The outline of the fifth exemplary embodiment will be described with reference to Fig. 24. In a system illustrated in Fig. 24, it is assumed that the control apparatus 5 allocates communication paths, in units of groups, to different virtual gateways 3A (for example, virtual C-Planes 30 or virtual U-Planes 31). For example, a communication path group (1) is allocated to a virtual U-plane (#1).

In the example of Fig. 24, a communication apparatus 4 and a server 33 including the virtual gateways 3A are discrete apparatuses, but the present invention is not limited to the architecture shown in Fig. 24. For example, as in the example of Fig. 12, it is also possible that the functions of the communication apparatus 4 are executed by a virtual switch 4A configured by using software operating on a virtual machine. Moreover, in the example of Fig. 24, shared DBs 110 are included in the server 33, but the present invention is not limited to the architecture shown in Fig. 24. For example, the shared DBs 110 may be external storages.

Since the control apparatus 5 manages communication paths in units of groups, the management of associations between the virtual gateways 3A and the communication paths is facilitated. For example, the control apparatus 5 can manage virtual C-Planes 30 associated with communication paths in units of communication path groups, in the route information DB 52.

The control apparatus 5 groups communication paths, for example, based on the attribute of a terminal 1 corresponding to each communication path. Examples of the attribute of a terminal 1 are listed below.
- Area where a terminal 1 is staying (E-UTRAN Cell ID or the like)
- Charging type with respect to a terminal 1 (normal charging, pre-paid charging, flat rate, or the like)
- Communication status of a terminal 1 (whether or not a terminal 1 has made a certain volume or more of communication within a certain period of time)
- Operator ID (the ID of the operator of a core network to which a terminal 1 is connected)
- Packet Data Network (PDN) to which a terminal 1 is connected
- Service type requiring chaining after having left the communication path
- QoS characteristic
- State of a terminal 1 (IDLE state or CONNECTED state): IDLE state means, for example, a state where a terminal 1 is not consecutively exchanging control signals for session management and mobility management with a core network, a state where wireless connection with a base station is released, or the like. CONNECTED state means, for example, a state where a terminal 1 is consecutively exchanging control signals for session management and mobility management with a core network, a state where a terminal 1 is wirelessly connected to a base station, or the like.

Note that the above-described attributes of a terminal 1 are shown for illustration, and it is also possible that the control apparatus 5 groups communication paths based on another attribute. For example, the control apparatus 5 can group communication paths based on UE (User Equipment)-related information of the "EPS Bearer Context" disclosed in sub-chapter 5.7 of the standard specifications (3GPP TS23.401).

Moreover, the control apparatus 5 can also group communication paths based on the content of a contract between the user of a terminal 1 and a carrier. For example, it is possible that the control apparatus 5 groups those communication paths associated with users who have made contracts for higher fees (e.g., "premium subscribers") than other users with a carrier, and/or groups those communication paths associated with users under normal contracts.

Further, the control apparatus 5 can also group communication paths based on information about the location of a terminal 1 (e.g., GSP information or information on a base station to which a terminal 1 is attaching). For example, it is possible to group the communication paths of terminals in proximity to each other based on their location-related information.

Furthermore, the control apparatus 5 can also group communication paths based on QoS (Quality of Service) information on each communication path. For example, the control apparatus 5 can group communication paths based on a QCI (Quality Class Indicator) corresponding to each communication path. For example, communication paths corresponding to a QCI with lower priority than a predetermined value are grouped, and, when a new virtual U-plane 31 is installed, the communication paths belonging to this group are allocated to this new virtual U-plane 31. In this case, it is expected that users' QoE (Quality of Experience) can be degraded due to a delay or the like of communication related to the communication paths caused by the route switching. However, the lower-priority communication paths are grouped and allocated to the new virtual U-plane, whereby communication paths suffering QoE degradation can be limited to the lower-priority communication paths.

The TEID of each communication path may be assigned in such a manner that the TEIDs of a plurality of communication paths belonging to a group can be collectively identified. For example, a TEID is assigned to each of a plurality of communication paths belonging to a group such that the TEIDs, each of which is composed of 32-bit information, will have the same upper 24 bits. By assigning TEIDs in this manner, the control apparatus 5 can collectively identify a plurality of communication paths belonging to a group based on the upper 24-bit information of their TEIDs.

In an example shown in Fig. 25, a communication path group is identified based on a group ID, and an associated virtual gateway 3A is allocated to each ID, in the route information DB 42 of the communication apparatus 4. Note that the route information DB 52 of the control apparatus 5 has a structure similar to the example of Fig. 25.

The communication apparatus 4 searches the route information DB 42 by using a communication path identifier of a received packet as a key and forwards the received packet to a virtual gateway 3A associated with the communication path identifier in the received packet.

As in an example shown in Fig. 26, the control apparatus 5 can change an associated virtual gateway 3A on a communication path group basis. For example, the control apparatus 5 can change a virtual gateway associated with a group to which communication paths of communication path identifiers (A) to (C) belong, from a virtual C-Plane 30(a) to a virtual C-Plane 30(e).

The control apparatus 5 changes an associated gateway on a communication path group basis and thereby can considerably reduce the amount of information of control signals toward the communication apparatus 4. The control apparatus 5 can send an instruction to change an associated gateway to the communication apparatus 4 by using a group ID as a key, as shown in Fig. 26.

It is assumed that the route information DB 42 of the communication apparatus 4 has a structure as shown in Fig. 15. In this case, when the control apparatus 5 changes a gateway associated with the group (1) shown in Fig. 26 from the gateway (a) to the gateway (e), then the control apparatus 5 needs to send a control signal for changing the associated gateway to the communication apparatus 4 having the route information DB 42 shown in Fig. 15 with respect to each of the communication path identifiers (A) to (C). However, if the control apparatus 5 sends a control signal by using a group ID for a key as in the fifth exemplary embodiment, control signals will be reduced to one third in comparison with the example of Fig. 15, as illustrated Fig. 26. That is, the fifth exemplary embodiment has the advantage that the control apparatus 5 reduces a more amount of control signals as a larger number of communication paths are grouped, and it is possible to achieve higher-speed gateway switching for communication paths.

Further, in the fifth exemplary embodiment, the plurality of shared DBs 110 are shared among the virtual gateways 3A, as in the example of Fig. 24. In the example of Fig. 24, the shared DBs 110 are allocated to the virtual C-planes 30 according to the communication path groups. For example, in Fig. 24, the shared DB (1) is allocated to the virtual C-Planes corresponding to the communication path groups (1) and (2), and the shared DB (2) is allocated to the virtual C-Planes corresponding to the communication path group (3). The control section 120 of the computer 10 or the DB control section 51 of the control apparatus 5 allocates the shared DBs 110 to the virtual C-Planes based on the communication path groups.

Each shared DB 110 can store communication status, for example, in units of communication path groups. In this case, a virtual network function 100 can aggregate the communication status of each communication path belonging to a group into a predetermined shared DB 110. Accordingly, even if a virtual network function 100 associated with a communication path group is changed, a virtual network function 100 after change can manage the communication status by connecting to the predetermined shared DB 110. Accordingly, even if a new communication path group is allocated, a virtual network function 100 can avoid various problems that may be caused by accessing the plurality of shared DBs 110 (performance delays and the like due to access to the plurality of DBs).

Since the communication status-related information is managed by the shared DBs 110, for example, even when a virtual gateway 3A is dynamically installed, the communication status-related information need not be transferred to the installed virtual gateway 3A from another virtual gateway 3A. Accordingly, the architecture with the shared DBs 110 makes it possible to switch between virtual gateways 3A more quickly.

As described above, according to the fifth exemplary embodiment, the shared DBs 110 as described above are provided, in addition to the configuration that a virtual gateway 3A is associated with each communication path group. Accordingly, switching between virtual gateways 3A is performed even more quickly.

The VM control section 50 of the control apparatus 5 controls the installation, uninstallation, migration, and the like of a virtual gateway 3A. The control section 53 of the control apparatus 5 determines a virtual gateway 3A to be associated with a communication path group. The control section 53 notifies control information to the communication apparatus 4 based on associations between the communication path groups and the virtual gateways 3A. The DB control section 51 of the control apparatus 5 controls an association between a virtual gateway 3A and a shared DB 110, in response to the installation, uninstallation, migration, or the like of a virtual gateway 3A. For example, the DB control section 51 changes an association between a virtual gateway 3A and a shared DB 110, based on the communication path group. For example, the DB control section 51 may control an association between a virtual gateway 3A and a shared DB 110 by controlling the switching function 130 as in the example of Fig. 9.

Exemplary embodiments of the present invention have been described hereinabove. However, the present invention is not limited to each of the above-described embodiments. The present invention can be implemented based on a modification of, a substitution of, and/or an adjustment to each exemplary embodiment. Moreover, the present invention can be also implemented by combining any of the exemplary embodiments. That is, the present invention incorporates the entire disclosure of this description, and any types of modifications and adjustments thereof that can be implemented based on technical ideas. Furthermore, the present invention can be also applied to the technical field of SDN (Software-Defined Network).

### [Reference Signs List]

1 Terminal
2 Base station
3 Gateway
3A Virtual gateway
30 Virtual C-Plane
31 Virtual U-Plane
4 Communication apparatus
40 Communication path identification section
41 Switching section
42 Route information database
4A Virtual switch
5 Control apparatus
50 VM control section
51 DB control section
52 Route information database
53 Control section
54 Communication interface
7 MME
10 Computer
100 Virtual network function
110 Shared database
120 Control section
130 Switching function

## Claims

1. An information processing apparatus **characterized by** comprising:
a first means capable of executing a virtual network function on a virtual machine, wherein the virtual network function provides a function related to communication processing; and
a second means capable of connecting a shared database with each of a plurality of virtual network functions, wherein the shared database stores communication status related to the communication processing executed by each of the plurality of virtual network functions.

2. The information processing apparatus according to claim 1, **characterized in that**, in response to activation of the virtual network function, the second means can connect the activated virtual network function to the shared database.

3. The information processing apparatus according to claim 1 or 2, **characterized in that**, in response to migration of the virtual network function to another one of the virtual machines, the second means can connect the migrated virtual network function with the shared database.

4. The information processing apparatus according to any one of claims 1 to 3, **characterized in that** the first means can store the communication status that has been changed in accordance with the communication processing executed by the virtual network function, in the shared database connected with the virtual network function.

5. The information processing apparatus according to any one of claims 1 to 4, **characterized in that** the second means can connect the virtual network function with the shared database corresponding to a type of this virtual network function.

6. The information processing apparatus according to any one of claims 1 to 5, **characterized in that**, based on a type of the virtual network function, the second means can select the shared database to be connected with this virtual network function from among a plurality of shared databases.

7. The information processing apparatus according to any one of claims 1 to 6, **characterized in that**, when the virtual network function has a predetermined type of function, the second means can connect this virtual network function with the shared database.

8. The information processing apparatus according to any one of claims 1 to 7, **characterized in that** the first means can access the shared database based on identification information related to the communication status.

9. The information processing apparatus according to any one of claims 1 to 8, **characterized in that** the first means can access the shared database based on identification information related to a communication terminal to which the communication service is provided.

10. A communication method **characterized by** comprising:
executing a virtual network function on a virtual machine, wherein the virtual network function provides a function related to communication processing; and
connecting a shared database with each of a plurality of virtual network functions, wherein the shared database stores communication status related to the communication processing executed by each of the plurality of virtual network functions.

11. The communication method according to claim 10, **characterized in that**, in response to activation of the virtual network function, the activated virtual network function and the shared database are connected.

12. The communication method according to claim 10 or 11, **characterized in that**, in response to migration of the virtual network function to another one of the virtual machines, the migrated virtual network function and the shared database are connected.

13. The communication method according to any one of claims 10 to 12, **characterized by** comprising:
storing the communication status that has been changed in accordance with the communication processing executed by the virtual network function, in the shared database connected with the virtual network function.

14. The communication method according to any one of claims 10 to 13, **characterized in that** the virtual network function and the shared database corresponding to a type of this virtual network function are connected.

15. The communication method according to any one of claims 10 to 14, **characterized in that**, based on a type of the virtual network function, the shared database to be connected with this virtual network function is selected from among a plurality of shared databases.

16. The communication method according to any one of claims 10 to 15, **characterized in that**, when the virtual network function has a predetermined type of function, this virtual network function and the shared database are connected.

17. The communication method according to any one of claims 10 to 16, **characterized by** comprising:
accessing the shared database based on identification information related to the communication status.

18. The communication method according to any one of claims 10 to 17, **characterized by** comprising:
accessing the shared database based on identification information related to a communication terminal to which the communication service is provided.

19. A network control apparatus **characterized by** comprising:
a first means capable of activating a virtual network function on a virtual machine, wherein the virtual network function provides a function related to communication processing; and
a second means capable of connecting a shared database with each of a plurality of virtual network functions, wherein the shared database stores communication status related to the communication processing executed by each of a plurality of virtual network functions.

20. The network control apparatus according to claim 19, **characterized in that**, in response to activation of the virtual network function, the second means can connect the activated virtual network function and the shared database.

21. The network control apparatus according to claim 19 or 20, **characterized in that**, in response to migration of the virtual network function to another one of the virtual machines, the second means can connect the migrated virtual network function and the shared database.

22. The network control apparatus according to any one of claims 19 to 21, **characterized in that** the second means can connect the virtual network function with the shared database corresponding to a type of this virtual network function.

23. The network control apparatus according to any one of claims 19 to 22, **characterized in that**, based on a type of the virtual network function, the second means can select the shared database to be connected with this virtual network function from among a plurality of shared databases.

24. The network control apparatus according to any one of claims 19 to 23, **characterized in that**, when the virtual network function has a predetermined type of function, the second means can connect this virtual network function with the shared database.

25. A network control method **characterized by** comprising:
activating a virtual network function on a virtual machine, wherein the virtual network function provides a function related to communication processing; and
connecting a shared database with each of the plurality of virtual network functions, wherein the shared database stores communication status related to the communication processing executed by each of a plurality of the virtual network functions.

26. A communication system **characterized by** comprising:
a first means capable of executing a virtual network function on a virtual machine, wherein the virtual network function provides a function related to communication processing; and
a second means capable of connecting a shared database with each of the plurality of the virtual network functions, wherein the shared database stores communication status related to the communication processing executed by each of a plurality of virtual network functions.

27. A program **characterized by** causing a computer to execute:
processing for executing a virtual network function on a virtual machine, wherein the virtual network function provides a function related to communication processing; and
processing for connecting a shared database with each of the plurality of virtual network functions, wherein the shared database stores communication status related to the communication processing executed by each of a plurality of the virtual network functions.
